# EUROPEAN PATENT SPECIFICATION

(11) **EP 1 470 859 B1**
(45) Date of publication and mention of the grant of the patent: **23.08.2006**
(21) Application number: 04009020.1
(22) Date of filing: 15.04.2004
(51) Int. Cl.: B01J 21/04, B01J 21/06, B01J 32/00, B01J 23/38, B01D 53/94

(54) **Catalyst support based on an Al-Ti composite oxide, process for producing the same, catalyst and process for purifying exhaust gases**
Katalysatorträger auf der Basis eines Al-Ti Verbundoxid, seine Herstellung, Katalysator und Verfahren zur Abgasenreinigung
Support de catalyseur à base d'un oxide composite de Ti et Al, sa préparation, catalyseur et procédé d'épuration de gaz d'échappement

(30) Priority: 21.04.2003 JP 2003115865
(43) Date of publication of application: 27.10.2004
(73) Proprietor: KABUSHIKI KAISHA TOYOTA CHUO KENKYUSHO, Aichi-gun, Aichi-ken, 480-1192 (JP)
(72) Inventor: Imagawa, Haruo K. K. Toyota Chuo Kenkyusho, Aichi-gun Aichi-ken 480-1192 (JP); Takahashi, Naoki K. K. Toyota Chuo Kenkyusho, Aichi-gun Aichi-ken 480-1192 (JP); Tanaka, Toshiyuki K. K. Toyota Chuo Kenkyusho, Aichi-gun Aichi-ken 480-1192 (JP); Suda, Akihiko K. K. Toyota Chuo Kenkyusho, Aichi-gun Aichi-ken 480-1192 (JP)
(74) Representative: Kramer - Barske - Schmidtchen

(56) References cited:
- EP-A- 0 657 204
- EP-A- 1 036 767
- PATENT ABSTRACTS OF JAPAN vol. 2003, no. 02, 5 February 2003 (2003-02-05) -& JP 2002 282688 A (TOYOTA CENTRAL RES & DEV LAB INC), 2 October 2002 (2002-10-02)
- PATENT ABSTRACTS OF JAPAN vol. 1997, no. 05, 30 May 1997 (1997-05-30) & JP 9 000926 A (TOYOTA CENTRAL RES & DEV LAB INC), 7 January 1997 (1997-01-07)

## Description

### BACKGROUND OF THE INVENTION

### Field of the Invention

The present invention relates to a catalyst support which is optimum for purifying exhaust gases, a process for producing the same, an NOₓ storage-reduction catalyst which uses the catalyst support, and a process for purifying exhaust gases with the catalyst.

### Description of the Related Art

Recently, as catalysts for purifying exhaust gases emitted form lean-burn gasoline engines, NOₓ storage-reduction catalysts have been put into practical applications. The NOₓ storage-reduction catalysts comprise a porous support, such as alumina (i.e., Al₂O₃), an NOₓ storage member, such as alkali metals and alkaline-earth metals, loaded on the porous support, and a noble metal loaded on the porous support. When using the NOₓ storage-reduction catalysts, the air-fuel ratio is controlled so as to change it from fuel-lean sides and fall it within the range between the fuel stoichiometry and fuel-rich sides in a pulsating manner. Accordingly, NOₓ are stored in the NOₓ storage member on fuel-lean sides. The stored NOₓ are released within the range between the fuel stoichiometry and fuel-rich sides, and are reacted with reducing components, such as HC and CO, by the catalytic action of the noble metal. Consequently, NOₓ are inhibited from being emitted on fuel-lean sides as well. Therefore, the NOₓ storage-reduction catalysts exhibit a high NOₓ purifying ability as a whole.

However, SO₂, which generates when sulfur (S) contained in fuels is burned, is included in exhaust gases, and is turned into SO₃ when it is oxidized by noble metals in oxygen-rich atmospheres. The SO₃ is readily turned into sulfuric acid by water vapor contained in exhaust gases. The resulting sulfuric acid and water vapor react with NOₓ storage members to generate sulfites and sulfates. Thus, it has been apparent that the resultant sulfites and sulfates poison NOₓ storage members to degrade. The phenomenon is referred to as "sulfur poisoning." Moreover, there arises a problem that the sulfur poisoning has been facilitated, because porous substrates such as Al₂O₃ have a property of being likely to adsorb SOₓ. Thus, when NOₓ storage members are turned into sulfites and sulfates, they cannot store NOₓ any more. As a result, the NOₓ storage-reduction catalysts suffer from a drawback that the NOₓ purifying ability has been lowered after a durability test.

Hence, Japanese Unexamined Patent Publication (KOKAI) No. 8-99034 proposes to use at least one composite support selected from the group consisting of TiO₂-Al₂O₃, ZrO₂-Al₂O₃ and SiO₂-Al₂O₃. Moreover, Japanese Unexamined Patent Publication (KOKAI) No. 9-926 discloses a catalyst for purifying exhaust gases which comprises a support composed of TiO₂-Al₂O₃-ZrO₂ composite oxide. TiO₂, ZrO₂ and SiO₂ exhibit a low affinity to SOₓ, because they exhibit a higher acidity than that of Al₂O₃. As a result, it is possible to inhibit NOₓ storage members from being poisoned by sulfur. In addition, when TiO₂ and ZrO₂ are composited with Al₂O₃ to make their composite oxide, not only the sulfur poisoning of NOₓ storage members is inhibited but also the heat resistance of the support is improved.

Such composite oxide supports are produced by preparing oxide precursors including a plurality of metallic elements by means of alkoxide methods and coprecipitation methods followed by calcining them. Among the methods, coprecipitation methods produce an advantage that the resulting composite oxides can be produced less expensively, because the material cost is less expensive than that of alkoxide methods. Therefore, coprecipitation methods have been employed extensively in the production of composite oxides.

However, because of the recently strengthened exhaust-gas regulations or the increasing opportunity of high-speed driving, the temperature of exhaust gases has become extremely high. Accordingly, there might arise cases where the heat resistance of supports is insufficient, because the specific surface area of supports lowers or the granular growth of noble metals occurs even when the aforementioned composite oxide supports are used. Consequently, it has been required to further improve the heat resistance of supports. Moreover, the sulfur-poisoning problem has not been solved yet. It is believed that these drawbacks occur because the respective metallic elements composing the composite oxides do not fully exhibit their characteristics.

For example, when a ZrO₂-TiO₂ solid solution disclosed in Japanese Unexamined Patent Publication (KOKAI) No. 2000-327329 (EP-A-1 036 767) is composited with Al₂O₃, it can be made into a catalyst support which is good in terms of the sulfur-poisoning resistance, because it exhibits high resistance to the sulfur poisoning. Moreover, the resulting catalyst support is provided with a high specific surface area. Hence, the inventors of the present invention thought of a catalyst support comprising a composite oxide which is made by calcining precipitates which are generated from an aqueous solution including Al, Zr and Ti by a coprecipitation method. Such a catalyst support is expected to exhibit further enhanced sulfur-poisoning resistance, because the ZrO₂-TiO₂ solid solution and Al₂O₃ coexist mutually in a manner of fine particles whose particle diameter is 50 nm or less.

However, the composite oxide has drawbacks that the specific surface area lowers at high temperatures and the heat resistance is insufficient, because both of the ZrO₂-TiO₂ solid solution and Al₂O₃ are put into a fine particulate state of 50 nm less. Hence, the inventors of the present invention tried to add La to the composite oxide. However, in composite oxides which are made by calcining precipitates which are generated from an aqueous solution including Al, Zr, Ti and La by coprecipitation methods, basic La₂O₃ has solved on the side of the ZrO₂-TiO₂ solid solution, and consequently La does not contribute to the stabilization of Al₂O₃. Thus, the inventors observed a phenomenon that the sulfur-poisoning resistance of composite oxides is lowered adversely.

Meanwhile, Japanese Unexamined Patent Publication (KOKAI) No. 2002-282688 discloses a catalyst support comprising an Al₂O₃-ZrO₂-TiO₂ composite oxide. Moreover, the catalyst support has pores whose pore diameter falls in the mesopore range, and further comprises tetragonal zirconia. In addition, in the catalyst support, at least a part of the ZrO₂ and TiO₂ is turned into a ZrO₂-TiO₂ solid solution. The catalyst support has been calcined at high temperatures already. Accordingly, when the catalyst support is used in catalysts, the specific surface area of the catalyst support is inhibited from lowering. Moreover, impurities in the catalyst support have been removed by calcining the catalyst support at high temperatures. As a result, loaded noble metals and NOₓ storage members can demonstrate their inherent characteristics. Consequently, even when the catalyst support is used in catalysts and is subjected to high temperatures, it is possible to inhibit loaded noble metals and NOₓ storage members from sintering and simultaneously to upgrade the sulfur-poisoning resistance of the resulting catalysts.

When the catalyst support disclosed in Japanese Unexamined Patent Publication (KOKAI) No. 2002-282688 is made into catalysts, there still remains room for improving the sulfur-poisoning resistance. Thus, it has been desired to further upgrade the performance of the catalyst support.

EP 1 036 767 A1 discloses a titania-zirconia powder, wherein at least a part of the zirconia is solid-dissolved in the titania crystalline phase or at least a part of the titania is solid-dissolved in the zirconia crystalline phase, and a titania-zirconia powder, wherein the above-mentioned titania-zirconia powder having an average particle size of 1 µm or smaller is mutually dispersed with an alumina powder.

It is therefore an object of the present invention to solve the problems similar to those associated with the catalyst support disclosed in Japanese Unexamined Patent Publication (KOKAI) No. 2002-282688. Specifically, it is an object of the present invention to provide an NOₓ storage-reduction catalyst which can furthermore inhibit the sulfur poisoning, and which exhibits high durability simultaneously.

The above object is achieved by the catalyst support according to claim 1, the process according to claim 5, the catalyst according to claim 8 and the process according to claim 9.

Thus, the present catalyst employing the present catalyst support not only exhibits improved sulfur-poisoning resistance, but also demonstrates enhanced NOₓ-storage-ability recoverability because SOₓ are readily eliminated from the present catalyst starting at low-temperature regions even when the present catalyst is sulfur-poisoned. Therefore, the present catalyst can maintain the high NOₓ storage ability for a long period of time.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is an FE-TEM (i.e., field emission-transmission electron microscope) photograph for illustrating a particulate structure of a catalyst support powder according to Example No. 1 of the present invention.

Fig. 2 is another FE-TEM photograph for illustrating a particulate structure of the catalyst support powder according to Example No. 1.

Fig. 3 is an FE-TEM photograph for illustrating a particulate structure of a catalyst support powder according to Comparative Example No. 1.

Fig. 4 is a schematic explanatory diagram for illustrating the catalyst support powder according to Example No. 1.

Fig. 5 is graph for illustrating the relationships between temperatures and SOₓ concentrations in outlet gases, relationships which were exhibited by catalysts according to Example No. 2 and Comparative Example No. 2.

Fig. 6 is graph for illustrating the relationships between temperatures and RSNOₓ (i.e., rich spike NOₓ) storage amounts, relationships which were exhibited by the catalysts according to Example No. 2 and Comparative Example No. 2.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

In the present catalyst support, titania particles exist in such a state that at least a part thereof is solved in alumina in at least a part of a surface of a composite oxide in which an oxide comprising alumina-based oxide with titania solved therein is mixed with zirconia on nanometer level. Therefore, sulfur oxides are much more inhibited from adhering onto the present catalyst support when the present catalyst support is used in NOₓ storage-reduction catalysts, because the acidity of TiO₂ is given to Al₂O₃ as well. Simultaneously, the present catalyst is enhanced in terms of the characteristic that sulfur oxides are likely to be eliminated therefrom even when sulfur oxides adhere thereon. As a result, NOₓ storage-reduction catalysts employing the present catalyst support can furthermore inhibit the sulfur poisoning than the catalyst set forth in Japanese Unexamined Patent Publication (KOKAI) No. 2002-282688.

The process for producing the catalyst support set forth in Japanese Unexamined Patent Publication (KOKAI) No. 2002-282688 is basically a process in which Al, Zr and Ti oxide precursors are coprecipitated first and are calcined thereafter. Accordingly, the solving of TiO₂ into Al₂O₃ occurs extremely less, because the solving of TiO₂ into ZrO₂ occurs preferentially. On the other hand, in the present process for producing a catalyst support, precipitates are generated from a solution including Al, Zr and Ti, precipitates which include the Al, Zr and Ti; the precipitates are calcined, thereby turning them into a composite oxide; and a TiO₂ precursor is loaded on the composite oxide, and the composite oxide is calcined thereafter at 500 °C or more. Therefore, in the calcination of the composite oxide following the loading of the TiO₂ precursor thereon, at least a part of TiO₂ solves in the composite oxide. Consequently, the solving probability of TiO₂ into Al₂O₃ increases, because the composite oxide includes Al₂O₃. Moreover, the acidity of TiO₂ is added to Al₂O₃ as well. As a result, NOₓ storage-reduction catalysts employing catalyst supports produced by the present production process can inhibit the sulfur poisoning much more than the catalyst set forth in Japanese Unexamined Patent Publication (KOKAI) No. 2002-282688.

Moreover, in the same manner as disclosed in Japanese Unexamined Patent Publication (KOKAI) No. 2002-282688, the present catalyst support has been already calcined at high temperatures as well. Accordingly, when the present catalyst support is used in catalysts, the specific surface area of the present catalyst support is inhibited from lowering. Moreover, impurities in the present catalyst support have been removed by calcining the present catalyst support at high temperatures. As a result, it is believed that loaded noble metals and NOₓ storage members can demonstrate their inherent characteristics. Consequently, even when the present catalyst support is used in catalysts and is subjected to high temperatures, it is possible to inhibit loaded noble metals and NOₓ storage members from sintering and simultaneously to upgrade the sulfur-poisoning resistance of the resulting catalysts. In addition, the present catalyst support can produce high catalytic activities even after being subjected to high-temperature durability tests, because it exhibits a specific surface area of 90 m²/g or more after such durability tests. Note that, as for the another oxide, it is possible to representatively exemplify ZrO₂. However, the another oxide is not necessarily limited thereto.

In the present catalyst support, the solving amount of TiO₂ into Al₂O₃ is in a range of from 5 to 50% by mol, preferably from 5 to 30% by mol with respect to the entire Al₂O₃-TiO₂ solid solution taken as 100% by mol. When the TiO₂ solving amount is less than 5% by mol, the sulfur-poisoning resistance of the resulting catalyst supports decreases. When the TiO₂ solving amount is more than 50% by mol, the heat resistance of the resultant catalyst supports diminishes.

Moreover, the TiO₂ particles comprise TiO₂ particles alone a part of which is solved in Al₂O₃ or ZrO₂. It is not preferred that the TiO₂ particles exist as simple TiO₂. However, it does not matter if simple TiO₂ exists.

Specifically, the present catalyst support can desirably comprise: agglomerated particles (i.e., secondary particles) whose particle diameter is 20 µm or less; and a composite oxide or solid solution composed of Al₂O₃, ZrO₂ and TiO₂ and dispersed in the agglomerated particles as fine particles whose particle diameter is 50 nm or less. In this instance, even when the Al₂O₃, ZrO₂ and TiO₂ are put into a highly dispersed state, they are inhibited from agglomerating any more, because they have been agglomerated already. Therefore, not only the heat resistance of the present catalyst support is improved, but also the sulfur-poisoning resistance is further upgraded.

Moreover, in the desirable present catalyst support, the agglomerated particles can preferably exhibit metallic element distributions which differ between the surface and the inside. For example, when Al₂O₃ is present more in the surface, it is possible to stabilize noble metals to be loaded thereon. On the other hand, when ZrO₂-TiO₂ are present more in the surface, SOₓ are much less likely to adhere thereon so that it is possible to remarkably improve the sulfur-poisoning resistance of the present catalyst.

In the present catalyst support, the composition ratio of the respective oxides is in a range, Al₂O₃ : ZrO₂ : TiO₂ = 12-82 : 5-66 : 3-66, preferably Al₂O₃ : ZrO₂ : TiO₂ = 40-60 : 20-35 : 15-30, by mol. When the Al₂O₃ composition ratio is less than the lower limit, the activities of the resulting catalysts decrease. When the Al₂O₃ composition ratio is more than the upper limit, the sulfur-poisoning resistance of the resultant catalysts diminishes. Moreover, when the ZrO₂ composition ratio is less than the lower limit, solid phase reactions are likely to occur between NOₓ storage members and the resulting catalyst supports. When the ZrO₂ composition ratio is more than the upper limit, such a high ZrO₂ composition ratio causes a decrease in the specific surface area of the resultant catalyst supports. In addition, when the TiO₂ composition ratio is less than the lower limit, the sulfur-poisoning resistance of the resulting catalysts diminishes. When the TiO₂ composition ratio is more than the upper limit, the specific surface area of the resultant catalyst supports decreases.

In the present process for producing a catalyst support, precipitates including Al, Zr and Ti are generated first from a solution including the Al, Zr and Ti, and the resulting precipitates are calcined to turn them into a composite oxide. The procedures so far are similar to those disclosed in Japanese Unexamined Patent Publication (KOKAI) No. 2002-282688.

For example, the present production process can employ the following procedures: a solution of Al, Zr and Ti salts is prepared; the solution of the salts is mixed with an alkaline solution to form precipitates; the resulting precipitates are mixed with each other; and the resultant precipitate mixture is calcined at 550°C or more. Alternatively, the procedures can be altered so that solutions of Al, Zr and Ti salts are prepared, respectively; the solutions are mixed with an alkaline solution successively, which can neutralize the entire amount of the salts, to successively form precipitates; and the resulting precipitates are calcined at 550 °C or more.

It is necessary to calcine the precipitate mixture or precipitates at a temperature of 550 °C or more. The calcination temperature can further desirably be 650 °C or more, and can especially desirably fall in a range of from 650 to 900 °C. When the calcination temperature is less than 550 °C, noble metals are likely to cause sintering when catalysts using the resulting catalyst supports are subjected to durability tests, and the sulfur-poisoning resistance of the resultant catalysts diminishes as well. Moreover, when the calcination temperature exceeds 900 °C, it is not preferable because a decrease in the specific surface of the resulting catalyst supports occurs, decrease which results from the crystallization and phase transition of Al₂O₃.

In the production procedures of a composite oxide, it is desirable to add the solutions of Al, Zr and Ti salts to an alkaline solution successively or one after another. The procedure will be hereinafter referred to as a successive coprecipitation method. Actually, even when precipitates are precipitated or deposited from a mixture solution in which a plurality of salts are solved, precipitates are generated successively because of the solubility or ionization tendency differences. However, if such is the case, it is difficult to control the generation of precipitates. Accordingly, it is preferable to employ the successive coprecipitation method. The successive coprecipitation method operates as follows: a salt solution added first is neutralized and the salt is separated out of the solution as oxide precursors; when another salt solution added later is neutralized, newly generating oxide precursors are separated out of the another solution to preferentially precipitate on the surface of the precipitates generated in advance and working as nuclei, and settle thereon. Alternatively, the newly generating oxide precursors precipitate between the grain boundaries of the precipitates generated in advance and working as intervening substances, and settle therebetween.

It is desirable to generate first precipitates including Al, Zr and Ti from a solution including Al, Zr and Ti and subsequently to generate second precipitates from another solution including Al. Alternatively, it is possible to conversely generate first precipitates from a solution including Al and subsequently to generate second precipitates including Al, Zr and Ti from another solution including Al, Zr and Ti. Moreover, it is possible to generate first precipitates including Al, Zr and Ti from a solution including Al, Zr and Ti and subsequently to generate second precipitates including Al and at least one member selected from the group consisting of rare-earth elements and alkaline-earth metals from another solution including Al and at least one member selected from the group consisting of rare-earth elements and alkaline-earth metals. Alternatively, it is possible to conversely generate first precipitates including Al and at least one member selected from the group consisting of rare-earth elements and alkaline-earth metals from a solution including Al and at least one member selected from the group consisting of rare-earth elements and alkaline-earth metals and subsequently to generate second precipitates including Al, Zr and Ti from another solution including Al, Zr and Ti.

The first precipitates and second precipitates can be generated within the same apparatus in the following manner: a first solution including a single first metallic element or a plurality of first metallic elements is contacted with a volume of a first alkaline solution which can neutralize the acids of the first solution to generate the first precipitates; and thereafter a second solution including a plurality of second metallic elements or a single second metallic element as well as a volume of a second alkaline solution which can neutralize the acids of the second solution are further added to the mixture solution of the first solution and first alkaline solution to generate the second precipitates. Note that third or fourth precipitates can be further mixed with the first and second precipitates, or third or fourth precipitates can be further generated after generating the second precipitates.

Therefore, when a composite oxide is prepared by calcining the precipitate mixture, the metallic element distributions differ between the inner portion and the superficial portion in agglomerated particles which generate when the primary particles agglomerate. Thus, in accordance with the present production process, it is possible to readily produce the present catalyst support exhibiting metallic element distributions which differ between the surface and the inside by appropriately selecting the type of used salts.

The salts are not limited in particular as far as they exhibit a solubility to required water or alcohol, but nitrates can be used as an especially preferable option. As for the alkaline solution, it is possible to use aqueous solutions or alcoholic solutions in which ammonia, ammonium carbonate, sodium hydroxide, potassium hydroxide or sodium carbonate is solved. It is especially preferable to use aqueous solutions or alcoholic solutions in which ammonia or ammonium carbonate evaporating off during calcination is solved. Note that it is further preferable that the alkaline solution can exhibit a pH of 9 or more.

The deposition of precipitates can be controlled by various methods. For example, ammonia water is added to an acidic solution instantaneously, and the mixture solution is stirred vigorously. Alternatively, after a pH at which oxide precursors start depositing is controlled by adding hydrogen peroxide to an acidic solution, precipitates are deposited with ammonia water. Moreover, an acidic solution is neutralized for preferably 10 minutes or more by fully prolonging the time taken for neutralizing an acidic solution with ammonia water. In addition, an acidic solution is neutralized stepwise while monitoring the pH or adding a buffer solution which can keep the pH at a predetermined pH.

Moreover, when adding the salt solutions, it is preferable to add the salt solutions at once. Thus, it is possible to make the particle diameter of precipitated particles much finer. Specifically, it is possible to readily produce the composite oxide composed of agglomerated particles in which fine particles having a particle diameter of 50 nm or less are agglomerated and whose particle diameter is 20 µm or less. When adding the salt solution successively, it is possible to add the salt solutions in a plurality of stages, for instance, two stages or more. Note that, however, the upper limit of the multiple stages is not limited in particular.

In addition, it is furthermore preferable to carry out an aging step in which the mixture of precipitates is warmed in a suspension state in which water or solutions including water make a dispersant, or in such a state that water exists sufficiently in the system. Thus, it is possible to produce the present catalyst support whose pore diameters are controlled to fall in a predetermined range, though the mechanism has been unknown yet.

When aging the mixture of precipitates in such a state that water exists sufficiently in the system, the solution including the mixture of precipitates can be heated together with the mixture of precipitates to evaporate the solvent, and the mixture of precipitates can be calcined as it is. Alternatively, filtered precipitates can be calcined in the presence of water vapor. In this instance, it is preferable to calcine filtered precipitates in saturated water-vapor atmospheres.

When the aging step is carried out, the solving and reprecipitating of oxide precursors are facilitated by the heat of warming, and simultaneously the growth of the composite oxide particle occurs. In this instance, it is desirable to neutralize the solution of salts with an equivalent weight or more of a base which can neutralize all of the salts. Thus, oxide precursors are aged more uniformly, pores are formed effectively therein, and at the same time the solving of ZrO₂ with TiO₂ is further promoted.

The aging step can be carried out at room temperature or more, preferably at 100 to 200°C, further preferably at 100 to 150°C. When warming the mixture of precipitates at a temperature of less than 100 °C, such aging produces the facilitating effects less, but it takes much more time for the aging. When warming the mixture of precipitates at a temperature of higher than 200°C, it requires a synthesizing apparatus which can withstand a pressure of 10 atm or more to increase the equipment cost, and accordingly is not suitable for producing catalyst supports.

The thus obtained precipitates can be calcined at 550 °C or more. As described above, when the calcination temperature is less than 550 °C, noble metals are likely to cause sintering when catalysts using the resulting catalyst supports are subjected to durability tests, and the sulfur-poisoning resistance of the resultant catalysts diminishes as well. Moreover, when the calcination temperature exceeds 900 °C, it is not preferable because a decrease in the specific surface of the resulting catalyst supports occurs, decrease which results from the crystallization and phase transition of Al₂O₃.

In the present process for producing a catalyst support, the composite oxide produced as described above is loaded with a titania precursor, and is thereafter calcined at 500 °C or more. As for the titania precursor, it is possible to exemplify precursors such as hydroxides which precipitate or deposit from a solution of soluble titanium salts, or precursors which are formed by hydrolyzing titanium alkoxides. When loading such precursors on the composite oxide, it is possible to employ the following methods. For example, a powder of the composite oxide is mixed into an aqueous solution of soluble titanium salts, and titania precursors are precipitated or deposited on the powder in situ. Alternatively, a powder of the composite oxide is mixed into an alcoholic solution of titanium alkoxides, and the titanium alkoxides are hydrolyzed to precipitate precursors on the powder.

After loading a titania precursor on the composite oxide, the composite oxide is calcined at 500 °C or more. When the calcination temperature is less than 500 °C, the solving of titania into the composite oxide does not occur so that the titania particles are put into such a state that they exist on the surface of the composite oxide. Accordingly, the acidity of TiO₂ is given to Al₂O₃ so insufficiently that the sulfur-poisoning resistance of the resultant catalysts diminishes. Moreover, it is desirable to calcine the composite oxide at a temperature falling in a range of from 500 to 900°C in which organic substances, one of the constituent components of the titanium precursor, are removed by burning. When the composite oxide is calcined at a temperature of more than 900 °C, it is not preferable because a decrease in the specific surface of the resulting catalyst supports occurs, decrease which results from the crystallization and phase transition of Al₂O₃.

The present catalyst comprises the above-described present catalyst support, a noble metal loaded on the catalyst support, and an NOₓ storage member loaded on the catalyst support. As for the noble metal, it is possible to utilize Pt, Rh, Pd, Ir and Ru. However, Pt exhibiting a high NO oxidizing activity is an especially preferable option. The noble metal can be loaded in an amount of from 0.1 to 20 g with respect to 1 L of the present catalyst support. When the loading amount of the noble metal is less than the lower limit, the resulting catalysts exhibit a low NOₓ purifying activity. When the loading amount of the noble metal is more than the upper limit, not only the activities of the noble metal saturate but also the material cost has gone up.

The NOₓ storage member can comprise at least one member selected from the group consisting of alkali metals, alkaline-earth metals and rare-earth elements. At least one of alkali metals and alkaline-earth metals exhibiting a high basicity can be used as a desirable option. It is especially preferable to simultaneously use both alkali metal and alkaline-earth metal, because alkali metals exhibit a high NOₓ storage ability in high-temperature regions and alkaline-earth metals exhibit a high NOₓ storage ability in low-temperature regions. For example, K and Ba can be used simultaneously. Note that the NOₓ storage member is loaded on the present catalyst support in a form of salts, such as carbonates, oxides or hydroxides.

The NOₓ storage member can be loaded in an amount of from 0.1 to 1.2 mol with respect to 1 L of the present catalyst support. When the loading amount of the NOₓ storage member is more than the upper limit, there might occur a phenomenon that the noble metal is covered with the NOₓ storage member. As a result, the resulting catalysts might exhibit a degraded NOₓ purifying activity.

The present catalyst can be produced in the following manner. A coating layer is formed of the powdered present catalyst support on a heat-resistant honeycomb-shaped substrate made of corrdierite or metallic foils. Then, the noble metal and NOₓ storage member are loaded on the coating layer. It is possible to use the present catalyst to purify exhaust gases emitted from gasoline engines, diesel engines or gas engines (i.e., gas heat pump).

The present process for purifying exhaust gases comprises the steps of usually contacting the present catalyst with oxygen-rich exhaust gases containing sulfur oxides; and intermittently contacting the present catalyst with oxygen-lean exhaust gases. In the present exhaust-gas purifying process, the NOₓ storage member is inhibited from being poisoned by sulfur, because the present catalyst exhibits such a strong acidity at the surface that sulfur oxides are inhibited from approaching the present catalyst. Moreover, even if the NOₓ storage member might be sulfur-poisoned, sulfur oxides are released from the NOₓ storage member with ease in oxygen-lean exhaust gases, are reacted with reducing gases which exist abundantly in the atmospheres, and eventually removed by reduction. Therefore, even the sulfur-poisoned NOₓ storage member can readily recover the NOₓ storage ability starting at low-temperature regions, and accordingly the NOₓ storage member can maintain the NOₓ storage ability for a long period of time as a whole.

### EXAMPLES

The present invention will be hereinafter described in more detail with reference to specific examples and comparative examples.

### (Example No. 1)

Aluminum nitrate, zirconyl oxynitrate and titanium tetrachloride were stirred in water to mix, thereby preparing a mixture aqueous solution. Ammonia water was added to the mixture aqueous solution to neutralize, thereby producing precipitates by a coprecipitation method. Together with the mixture aqueous solution, the precipitates were subjected to aging in which they were held under 2 atm at 120 °C for 2 hours. Then, the aged precipitates were calcined preliminary at 400 °C for 5 hours, and were thereafter calcined in air at 800 °C for 5 hours. The resulting composite oxide was pulverized to the median diameter D50 (i.e., D50 ≒ 10 µm) by a wet ball mill, thereby preparing a composite oxide powder.

Subsequently, an aqueous solution was prepared in which 0.9 mol citric acid was solved in ion-exchanged water, and was heated to 75 °C. While stirring the aqueous solution, 0.3 mol titanium tetraisopropoxide was added gradually, thereby preparing a titania precursor. Then, the titania precursor was loaded with respect to 120 g of the composite oxide powder so that the composite oxide powder loaded with the titanium oxide precursor included the titania precursor in an amount of 5% by mol by conversion into TiO₂. The composite oxide powder loaded with the titanium oxide precursor was dried at 110 °C for 10 hours, and was calcined in air at 800 °C for 3 hours, thereby preparing a catalyst support powder according to Example No. 1. Note that, in the present catalyst support powder, the composition proportion of the respective oxides was Al₂O₃ : ZrO₂ : TiO₂ = 48 : 34 : 18 by weight.

### (Comparative Example No. 1)

Aluminum nitrate, zirconyl oxynitrate and titanium tetrachloride were stirred in water to mix, thereby preparing a mixture aqueous solution. Ammonia water was added to the mixture aqueous solution to neutralize, thereby producing precipitates by a coprecipitation method. Together with the mixture aqueous solution, the precipitates were subjected to aging in which they were held under 2 atm at 120 °C for 2 hours. Then, the aged precipitates were calcined at 400 °C for 5 hours, and were thereafter calcined in air at 800 °C for 5 hours. The resulting composite oxide was pulverized to the median diameter D50 (i.e., D50 ≒ 10 µ m) by a wet ball mill, thereby preparing a catalyst support powder according to Comparative Example No. 1. Note that, in the comparative catalyst support powder, the composition proportion of the respective oxides was Al₂O₃ : ZrO₂ : TiO₂ = 50 : 35 : 15 by weight.

### <Examination and Assessment>

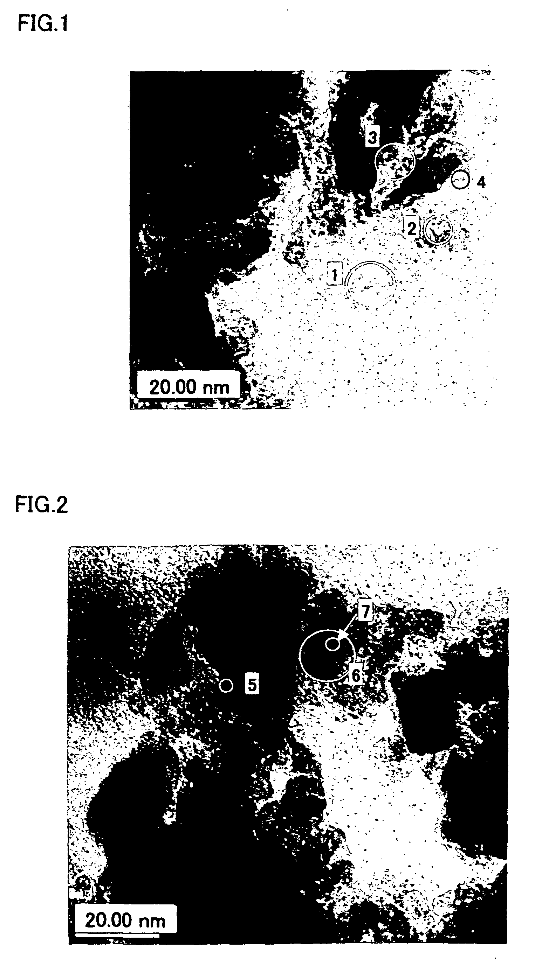

The catalyst support powders according to Example No. 1 and Comparative Example No. 1 were observed by an FE-TEM. Figs. 1 through 3 illustrate photographs taken by the FE-TEM. Moreover, Table 1 below summarizes the results of an elemental analysis on the catalyst support powders according to Example No. 1 and Comparative Example No. 1. In the drawings, note that the numbers designate points at which the elemental analysis was carried out.

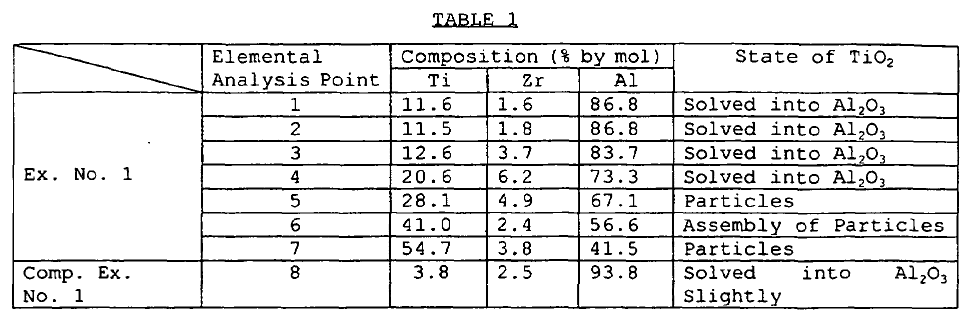

In Figs. 1 through 3, among the secondary particles (i.e., agglomerated particles), the primary particles whose profile is clear are ZrO₂-TiO₂ solid solutions, and the primary particles whose profile is pale and unclear are Al₂O₃. Therefore, it is understood that the catalyst support powders according to Example No. 1 and Comparative Example No. 1 comprised Al₂O₃ and ZrO₂-TiO₂ solid solutions which were mixed on nanometer level.

Moreover, when the parts of the catalyst support powder according to Example No. 1 corresponding to the primary particles (Al₂O₃ particles) whose profile is pale and unclear are compared with those of the catalyst support powder in Comparative Example No. 1, specifically when the elemental compositions at elemental analysis points 1 through 4 in Example No. 1 are compared with the elemental composition at elemental analysis point 8 in Comparative Example No. 1, it is understood that the elemental analysis points 1 through 4 comprised Ti element more than the elemental analysis point 8.

Namely, although the presence of TiO₂ particles was not confirmed by the observation with the FE-TEM, it was appreciated that the Al₂O₃ portions which were abundant in Ti, e.g., elemental analysis points 1 through 4, were present. It is believed that TiO₂ particles underwent granular growth when they were present, because the catalyst support powders were calcined at 800°C. Accordingly, TiO₂ particles should be observed by the FE-TEM. Consequently, it is not believed that TiO₂ particles are present as ultra-fine particles on angstrom order which are unobservable by the FE-TEM. Therefore, it is possible to judge that Al₂O₃-TiO₂ solid solutions were formed at elemental analysis points 1 through 4.

Thus, it is believed that Al₂O₃-TiO₂ solid solutions were formed at elemental analysis points 1 through 4 and elemental analysis point 8. The solving amount of TiO₂ in the catalyst support powder according to Example No. 1 was about 4 times more than that in the catalyst support powder according to Comparative Example No. 1.

Moreover, it is appreciated that TiO₂ particles on the order of a couple of nanometers were present in the catalyst support powder according to Example No. 1, because Ti element was abundant in the compositions at elemental analysis points 5 through 7. Note that, in the catalyst support powder according to Comparative Example No. 1, TiO₂ was present only in ZrO₂-TiO₂ solid solutions, and in Al₂O₃-TiO₂ solid solutions in which TiO₂ was solved slightly, and no presence of TiO₂ particles was appreciated.

According to the results of an X-ray diffraction analysis, note that ZrO₂-TiO₂ solid solutions were crystalline, and that the ZrO₂ crystalline phase was the tetragonal phase. Moreover, according to Powder Diffraction File No. 79-1768, the (101) crystal face of ZrO₂ tetragonal phase exhibits 2 θ of 30.22° in an X-ray diffraction chart obtained by using CuK_{α1} radiation. However, in the catalyst support powder according to Example No. 1, it is apparent that TiO₂ was solved in the ZrO₂ tetragonal phase because the peak is shifted onto the higher angle side, 30.42°.

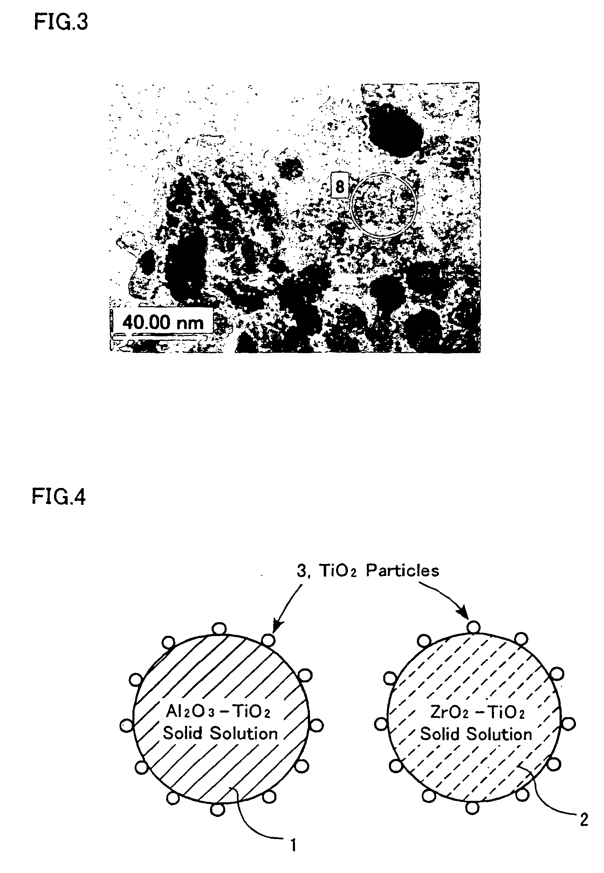

From the above-described results, it is believed that the catalyst support powder according to Example No. 1 is constructed as illustrated in Fig. 4. Namely, Al₂O₃-TiO₂ solid solutions 1 are mixed with ZrO₂-TiO₂ solid solutions 2 on nanometer level; and TiO₂ particles 3, at least a part of which is solved in Al₂O₃ and ZrO₂, exist on the surface of the Al₂O₃-TiO₂ solid solutions 1 and ZrO₂-TiO₂ solid solutions 2.

### (Example No. 2)

Onto the catalyst support powder produced in Example No. 1, Pt was loaded with a platinum dinitrodiammine aqueous solution, and subsequently Rh was loaded with a rhodium nitrate aqueous solution. The loading amount of the noble metals was 2 g for Pt and 0.1 g for Rh with respect to 120 g of the catalyst support powder. After loading the noble metals, the catalyst support powder was calcined in air at 250 °C for 1 hour. Moreover, onto the catalyst support powder with the noble metals loaded, Ba was loaded with a barium acetate aqueous solution, and subsequently K was loaded with a potassium acetate aqueous solution. The loading amount of the NOₓ storage members was 0.2 mol for Ba and 0.1 mol for K with respect to 120 g of the catalyst support powder. After loading the NOₓ storage members, the catalyst support powder was calcined in air at 500 °C for 2 hours.

The resulting catalyst powder was pelletized by an ordinary method, thereby preparing a pelletized catalyst according to Example No. 2.

### (Comparative Example No. 2)

Using the catalyst support powder produced in Comparative Example No. 1, a palletized catalyst according to Comparative Example No. 2 was prepared in the same manner as Example No. 2.

### <Examination and Assessment>

**[0070]**

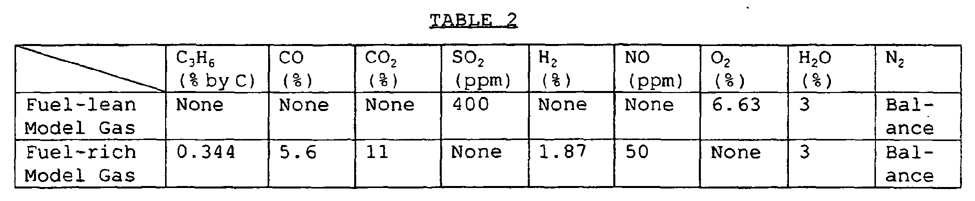

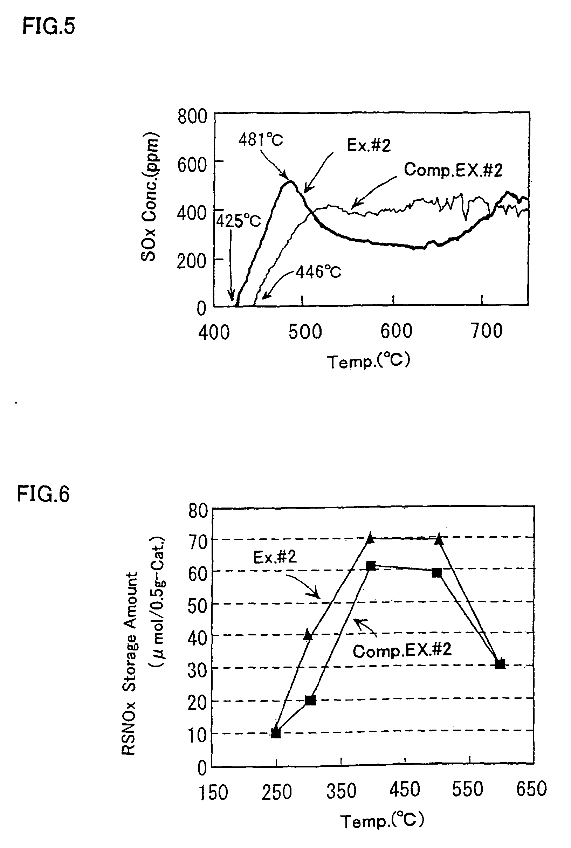

The pelletized catalysts according to Example No. 2 and Comparative Example No. 2 were filled into a testing apparatus in an equal amount, respectively. Then, a fuel-lean model gas set forth in Table 2 above was distributed through the testing apparatus at 600°C for 30 minutes to adhere SO₂ onto the pelletized catalysts. Thereafter, the pelletized catalysts were cooled to 100 °C in an N₂ gas atmosphere. Moreover, while distributing a fuel-rich model gas set forth in Table 2, the pelletized catalysts were heated from 100 °C to 800 °C at a rate of 15°C/minute. In the meantime, SOₓ amounts releasing from the pelletized catalysts (i.e., SOₓ concentrations in the outlet exhaust gases) were measured continuously. Fig. 5 illustrates the results. Moreover, the ratios of the SOₓ amount releasing from the pelletized catalyst according to Example No. 2 with respect to the SOₓ amount releasing from the pelletized catalyst according to Comparative Example No. 2 were calculated when the pelletized catalysts were heated from 100 °C up to 500 °C as well as up to 550 °C. Table 3 below summarizes the results.

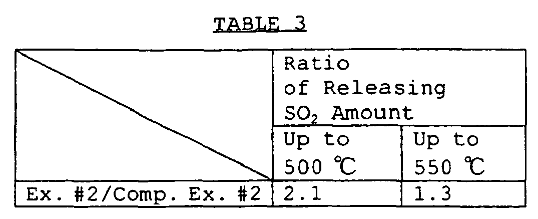

It is seen from Fig. 5 and Table 3 that SOₓ were released faster from the pelletized catalyst according to Example No. 2 than from the pelletized catalyst according to Comparative Example No. 2 starting at low-temperature regions. The advantage is believed to result from the presence of the Al₂O₃-TiO₂ solid solutions in which TiO₂ was solved abundantly as well as the presence of the TiO₂ particles.

Moreover, the pelletized catalysts according to Example No. 2 and Comparative Example No. 2 were filled into a testing apparatus in an equal amount, respectively. Then, a fuel-lean model gas set forth in Table 2 was distributed through the testing apparatus at 600 °C for 30 minutes to adhere SO₂ onto the pelletized catalysts. Thereafter, a fuel-rich model gas set forth in Table 4 below was further distributed through the testing apparatus at 600°C for 5 minutes to subject the pelletized catalysts to a sulfur-poisoning recovery treatment. While distributing a fuel-lean model gas set forth in Table 4 through the pelletized catalysts subjected to the sulfur-poisoning recovery treatment, the NOₓ storage amounts were measured at predetermined temperatures between 200 to 600 °C. The measurement was carried out in the following manner. After distributing the fuel-lean model gas through the pelletized catalysts, the fuel-rich model gas was distributed through them for 3 seconds, and the NOₓ storage amounts were measured when the fuel-rich model gas was switched again to the fuel-lean model gas (hereinafter referred to as "RSNOₓ storage amounts"). Fig. 6 and Table 5 below show the results.

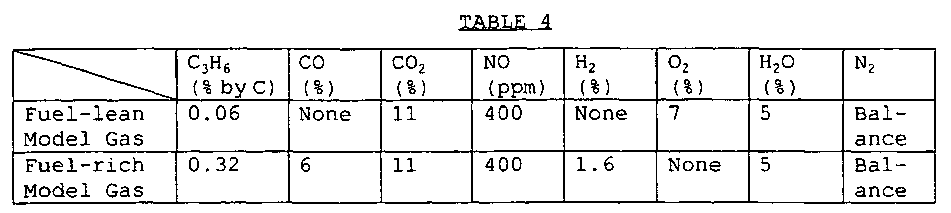

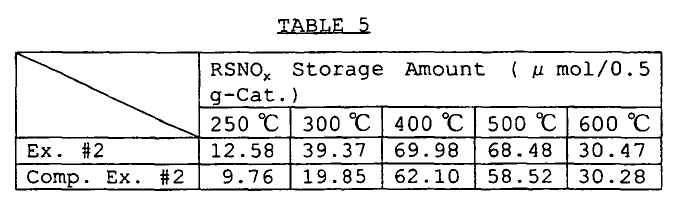

It is understood from Fig. 6 and Table 5 that the RSNOₓ storage amounts were more in the pelletized catalyst according to Example No. 2 than those in the pelletized catalyst according to Comparative Example No. 2. The phenomenon indicates that the NOₓ storage ability of the pelletized catalyst according to Example No. 2 was recovered more by the sulfur-poisoning recovery treatment than that of the pelletized catalyst according to Comparative Example No. 2. It is apparent that the remarkable advantage was demonstrated because the pelletized catalyst according to Example No. 2 employed the catalyst support powder comprising the Al₂O₃-TiO₂ solid solutions, in which TiO₂ was solved abundantly, and the TiO₂ particles.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

## Claims

1. A catalyst support comprising:
a composite oxide in which an oxide comprising an alumina-based oxide with titania solved therein is mixed with zirconia on a nanometer level; and
titania particles which exist in such a state that at least a part thereof is solved in alumina in at least a part of a surface of the composite oxide, wherein the titania is solved in the alumina-based oxide in an amount of from 5 to 50% by mol with respect to the entire alumina-based oxide with titania solved therein taken as 100% by mol, and wherein a composition ratio of the alumina, zirconia and titania falls in a range of alumina : zirconia : titania = 12-82 : 5-66 : 3-66 by mol; and wherein at least a part of the titania particles is further solved in zirconia.

2. The catalyst support set forth in claim 1, wherein at least a part of titania of the composite oxide is solved in the zirconia.

3. The catalyst support set forth in claim 1 comprising:
agglomerated particles whose particle diameter is 20 µm or less; and
a composide oxide or solid solution composed of Al₂O₃, ZrO₂ and TiO₂ and dispersed in the agglomerated particles as fine particles whose particle diameter is 50 nm or less.

4. The catalyst support set forth in claim 3, wherein the agglomerated particles exhibit metallic element distributions which differ between the surface and the inside.

5. A process for producing a catalyst support comprising the steps of:
generating precipitates from a solution including Al, Zr and Ti, the precipitates including the Al, Zr and Ti;
calcining the precipitates, thereby turning them into a composite oxide; and
loading a titania precursor on the composite oxide followed by calcining the composite oxide at 500°C or more.

6. The process set forth in claim 5, further comprising a step of aging the precipitates at room temperature or more in the presence of water before the calcining step.

7. The process set forth in claim 5 or 6, wherein the precipitates are calcined at 550°C or more in the calcining step.

8. A catalyst comprising:
the catalyst support set forth in any one of claims 1 to 4;
a noble metal loaded on the catalyst support; and
an NOₓ storage member loaded on the catalyst support.

9. A process for purifying exhaust gases comprising the steps of:
usually contacting the catalyst set forth in claim 8 with oxygen-rich exhaust gases containing sulfur oxides; and
intermittently contacting the catalyst with oxygen-lean exhaust gases.

## Patentansprüche

1. Katalysatorträger, umfassend:
ein Mischoxid, in dem ein Oxid, das ein Oxid auf Aluminiumoxidbasis mit darin gelösten Titanoxid umfasst, mit Zirkoniumoxid auf einem Nanometerniveau gemischt ist; und
Titanoxidteilchen, die in einem Zustand vorliegen, bei dem mindestens ein Teil davon in Aluminiumoxid in mindestens einem Teil einer Oberfläche des Mischoxids gelöst ist, wobei das Titanoxid in dem Oxid auf Aluminiumoxidbasis in einer Menge von 5 bis 50 mol-%, bezogen auf das gesamte Oxid auf Aluminiumoxidbasis mit darin gelöstem Titanoxid als 100 mol-%, gelöst ist, und wobei ein Zusammensetzungsverhältnis des Aluminiumoxids, des Zirkoniumoxids und des Titanoxids in einen Bereich von Aluminiumoxid:Zirkoniumoxid:Titanoxid = 12-82:5-66:3-66, bezogen auf Mol, fällt, und wobei mindestens ein Teil der Titanoxidteilchen ferner in Zirkoniumoxid gelöst ist.

2. Katalysatorträger nach Anspruch 1, bei dem mindestens ein Teil des Titanoxids des Mischoxids in dem Zirkoniumoxid gelöst ist.

3. Katalysatorträger nach Anspruch 1, umfassend:
agglomerierte Teilchen, deren Teilchendurchmesser 20 µm oder weniger beträgt; und
ein Mischoxid oder eine feste Lösung, das bzw. die aus Al₂O₃, ZrO₂ und TiO₂ zusammengesetzt ist und in den agglomerierten Teilchen in Form feiner Teilchen, deren Teilchendurchmesser 50 nm oder weniger beträgt, dispergiert ist.

4. Katalysatorträger nach Anspruch 3, bei dem die agglomerierten Teilchen Metallelementverteilungen aufweisen, die sich zwischen der Oberfläche und dem Inneren unterscheiden.

5. Verfahren zur Herstellung eines Katalysatorträgers, umfassend die Schritte:
Erzeugen von Niederschlägen aus einer Lösung, die Al, Zr und Ti umfasst, wobei die Niederschläge das Al, das Zr und das Ti umfassen;
Kalzinieren der Niederschläge, wodurch diese in ein Mischoxid umgewandelt werden; und
Aufbringen eines Titanoxidvorläufers auf das Mischoxid und dann Kalzinieren des Mischoxids bei 500°C oder mehr.

6. Verfahren nach Anspruch 5, das ferner einen Schritt des Alterns der Niederschläge bei Raumtemperatur oder mehr in der Gegenwart von Wasser vor dem Kalzinierungsschritt umfasst.

7. Verfahren nach Anspruch 5 oder 6, bei dem die Niederschläge in dem Kalzinierungsschritt bei 550°C oder mehr kalziniert werden.

8. Katalysator, umfassend:
den in einem der Ansprüche 1 bis 4 angegebenen Katalysatorträger;
ein auf den Katalysatorträger aufgebrachtes Edelmetall; und
ein NOₓ-Speicherelement, das auf den Katalysatorträger aufgebracht ist.

9. Verfahren zum Reinigen von Abgasen, umfassend die Schritte:
normalerweise Kontaktieren des im Anspruch 8 angegebenen Katalysators mit sauerstoffreichen Abgasen, die Schwefeloxide enthalten; und
diskontinuierlich Kontaktieren des Katalysators mit sauerstoffarmen Abgasen.

## Revendications

1. Support de catalyseur, comprenant :
un oxyde composite dans lequel un oxyde qui comprend un oxyde à base d'alumine avec du titane dissous dans celui-ci est mélangé avec du zirconium à un niveau nanométrique ; et
des particules de titane qui existent dans un état tel qu'au moins une partie de celles-ci sont dissoutes dans de l'alumine dans au moins une partie d'une surface de l'oxyde composite, de sorte que le titane est dissous dans l'oxyde à base d'alumine dans une quantité de 5 à 50 % par mole par rapport à la totalité de l'oxyde à base d'alumine, et en prenant le titane dissous dans celui-ci comme représentant 100 % par mole, et dans lequel un rapport de composition de l'alumine, du zirconium et du titane tombe dans une plage alumine:zirconium:titane = 12-82:5-66:3-66 par mole ; et dans lequel au moins une partie des particules de titane sont en outre dissoutes dans le zirconium.

2. Support de catalyseur selon la revendication 1, dans lequel au moins une partie du titane de l'oxyde composite est dissoute dans le zirconium.

3. Support de catalyseur selon la revendication 1, comprenant :
des particules agglomérées dont le diamètre de particules est de 20 µm ou moins ; et
un oxyde composite ou une solution solide composée de Al₂O₃, ZrO₂ et TiO₂ dispersé(e) dans les particules agglomérées sous forme de particules fines dont le diamètre de particules est de 50 nm ou moins.

4. Support de catalyseur selon la revendication 3, dans lequel les particules agglomérées présentent des distributions d'éléments métalliques qui diffèrent entre la surface et l'intérieur.

5. Procédé pour produire un support catalyseur, comprenant les étapes consistant à :
générer des précipités à partir d'une solution incluant Al, Zr et Ti, les précipités incluant Al, Zr et Ti ;
calciner les précipités, les transformant ainsi en un oxyde composite ; et
charger un précurseur de titane sur l'oxyde composite, suivi de la calcination de l'oxyde composite à 500°C ou plus.

6. Procédé selon la revendication 5, comprenant en outre une étape consistant à faire précipiter les précipités à température ambiante ou plus en présence d'eau avant l'étape de calcination.

7. Procédé selon la revendication 5 au 6, dans lequel les précipités sont calcinés à 550 °C ou plus dans l'étape de calcination.

8. Catalyseur comprenant :
le support de catalyseur selon l'une quelconque des revendications 1 à4;
un métal noble chargé sur le support de catalyseur ; et
un élément de stockage de NOₓ chargé sur le support de catalyseur.

9. Procédé pour purifier des gaz d'échappement, comprenant les étapes consistant à :
mettre habituellement en contact le catalyseur selon la revendication 8 avec des gaz d'échappement riches en oxygène qui contiennent des oxydes de soufre ; et
mettre en contact de façon intermittente le catalyseur avec des gaz d'échappement pauvres en oxygène.
